(19) Europäisches Patentamt
European Patent Office
Office européen des brevets

(11) **EP 2 207 134 A1**

(12) **EUROPEAN PATENT APPLICATION**

(43) Date of publication:
**14.07.2010 Bulletin 2010/28**

(51) Int Cl.:
***G06Q 10/00*** *(2006.01)*

(21) Application number: **08305894.1**

(22) Date of filing: **08.12.2008**

| | |
|---|---|
| (84) Designated Contracting States:<br>**AT BE BG CH CY CZ DE DK EE ES FI FR GB GR**<br>**HR HU IE IS IT LI LT LU LV MC MT NL NO PL PT**<br>**RO SE SI SK TR**<br>Designated Extension States:<br>**AL BA MK RS**<br><br>(71) Applicant: **Amadeus s.a.s**<br>**06410 Biot (FR)** | (72) Inventors:<br>• **Claverie, Béatrice**<br>**06000 Nice (FR)**<br>• **Arnaud, Romain**<br>**06130 Grasse (FR)**<br><br>(74) Representative: **Decobert, Jean-Pascal**<br>**Cabinet Hautier**<br>**20, rue de la Liberté**<br>**06000 Nice (FR)** |

(54) **Method and system for displaying interlining travel recommendations**

(57)    A method for sorting and displaying airline travel recommendations adapted to the display of interlining travel solutions is described. The method is **characterized in that** it first comprises computing expected airline revenue for each segment operated by a travel carrier involved in the travel recommendation. Then, a weight based on expected airline revenue is determined. This allows sorting the travel recommendations by decreasing order of weights. The interlining travel solutions are displayed accordingly.

Figure 3

EP 2 207 134 A1

**Description**

FIELD OF THE INVENTION

The present invention relates generally to revenue management and more specifically describes a system to display low-fare offerings of airlines in a way which however tends to maximize revenue of the validating airlines, i.e., those issuing the tickets, when passenger itineraries are shared with other participating airlines.

BACKGROUND OF THE INVENTION

An airline passenger itinerary can include flights operated by different air carriers. This is the result of agreements that may exist between independent airlines willing to share passenger itineraries on routes that actually require multiple airlines and, also, because they want to broaden the scope of travel opportunities offered to their clients. This practice is called interlining. It is very convenient for the passengers since they are delivered a single ticket thus allowing a single payment in a single currency. Also, passengers are assured that possible delays of connecting flights are accommodated and their luggage transferred between airlines. Interlining offers worldwide connectivity, enabling passengers to travel efficiently and economically on international networks. When an interlining agreement exists between two or more airlines one of them is the validating airline in charge of issuing the single ticket for the passenger itinerary. The other one(s) is/are the participating airline(s).

The interlining ticketing implies a sharing of revenue, on a prorata basis, between interline carriers. This is done under the terms and conditions of the bilateral and multilateral prorate agreements (MPAs) existing between the involved airlines. For example, a straight rate proration is achieved when revenue is shared on the basis of the respective mileage flown. Special clauses, known as provisos, may be part of the agreements signed between airlines. They are generally intended to compensate airlines with higher operating costs; e.g., those operating short distance flights.

Revenue proration is a critical function that is generally automated to allow an accurate proration of large volumes of tickets even though complex provisos and special prorate agreements may have to be considered. MPAs, provisos and special agreements must follow the general rules set by the international air transport association (IATA) and their automation implemented under the form of a neutral fare proration engine that is assumed to implement a fair sharing, among the participating airlines, of the revenue collected by the validating airline. The fare proration engine is generally part of a computerized revenue accounting system put in place by any airline and travel service provider directly or, most often, by having recourse to the services and large computing resources of a global distribution system (GDS) such as AMADEUS, a worldwide provider of technology solutions to the travel industry.

The interline travel offers are just displayed as all other regular travel offers by the numerous travel search engine (TSE) that are used by traditional and online travel agencies and, generally, by any provider of travel services in order to retrieve all the travel opportunities that match a particular customer request. Depending on the parameters entered (origin, destination, travel dates, class, etc.) TSE return all available travel opportunities currently left, sorted by ascending fare values, so that the customer can quickly pick the best value for his/her trip.

Interline travel offers that may appear in such a display quote, like any other offers, the total price of the trip, i.e., what client has actually to pay to have the corresponding ticket issued by the validating airline. However, as explained here above, this by no means represents the actual revenue of the validating airline since; in case of interline ticketing, a proration takes place and part of the revenue is retrofitted to the participating airline(s).

SUMMARY OF THE INVENTION

It is therefore the object of the invention to describe a method of processing data for producing a display of travel recommendations matching an itinerary, said method being adapted to the display of interlining travel recommendations made of a plurality of travel segments operated by a plurality of travel carriers. The method is **characterized in that** it comprises the following steps:

- From a computer device, sending a travel search request comprising search criteria to a remote travel search and booking engine;

- At the travel search and booking engine, building available travel recommendations matching the search criteria and;

- For each available travel recommendation:

    Determining an expected revenue for each travel segment operated by a travel carrier involved in the travel recommendation;

Determining a weight based on said expected revenue of said travel carrier;

- Sorting and generating display data of at least a set of the travel recommendations by decreasing order of said weights;

- returning the display data to the computer device and displaying the available travel recommendations.

The method of the invention may also comprise following optional features:

- The determination of an expected revenue is done on the basis of a proration of the total price of the corresponding travel recommendation.
- The proration is optionally done on the basis of the mileage flown per segment.
- The proration is optionally done on the basis of published prorate factors.
- The proration is optionally amended according to provisos agreed upon between airlines operating flights of the travel itinerary.
- The proration is optionally amended according to bilateral agreements between airlines.
- The weight is the sum of expected revenue of one or more segments operated by said travel carrier.
- The weight further includes expected revenue of one or more segments operated by airlines partner of said travel carrier.
- The weight is the sum of expected revenues of one or more segments operated by said travel carrier divided by the mileage flown or a function thereof.
- The weight further includes expected revenue divided by the mileage flown or a function thereof of one or more segments operated by airlines partner of said travel carrier.
- The given travel carrier is the airline issuing the travel tickets.
- The sorting of the travel recommendations is optionally done on the basis of business rules set by the airline issuing the travel tickets.

The invention also describes a data processing system for producing a display of travel recommendations matching an itinerary, said system being adapted to the display of interlining travel recommendations made of a plurality of travel segments operated by a plurality of travel carriers, **characterized in that** it comprises:

- A computer device having means for inputting search criteria, communications means for sending a travel search request comprising the search criteria and display means;

- A travel search and booking engine in communication with the computer device and having means for building travel recommendations matching the search criteria of and;

- Computing means configured to, for each travel recommendation:

   Determine an expected revenue for each travel segment operated by a given travel carrier involved in the travel recommendation;

   Determine a weight based on said expected revenue of said travel carrier;

   Sort and generate display data of at least a set of the travel recommendations by decreasing order of said weight;

   Return the display data to the computer device.

In a preferred embodiment, the system is such that the computing means comprises:

- a proration module for determining the expected revenue for each travel segment operated by a given travel carrier involved in the travel recommendation;
- a ranking module for sorting the travel recommendations by decreasing order of weights based on said expected revenue of said travel carrier;
- a coordinator in communication with the proration module, the routing module, the computer device and the travel search and booking engine.

The invention also includes a computer program product stored on a computer readable storage medium, comprising computer readable code means for causing at least one computer to operate the above method of sorting and displaying travel recommendations.

Further objects, features and advantages of the present invention will become apparent to the ones skilled in the art upon examination of the following description in reference to the accompanying drawings. It is intended that any additional advantages be incorporated herein.

BRIEF DESCRIPTION OF THE DRAWINGS

FIGURE 1 shows the steps of the method to display the lowest fares found by a travel search and booking engine of the prior art.
FIGURE 2 shows the extra steps introduced by the invention in the display of the travel recommendations returned by the low-fare search engine.
FIGURE 3 shows the modules involved in the computation of the prorated fare amounts per segment and the ranking of the travel recommendations on the basis of the revenue generated for the validating airline

DETAILED DESCRIPTION

The following detailed description of the invention refers to the accompanying drawings. While the description includes exemplary embodiments, other embodiments are possible, and changes may be made to the embodiments described without departing from the spirit and scope of the invention. In particular, the example given hereafter relates to the airline industry but the invention is applicable to other carrier types such as, but not limited to, railways.

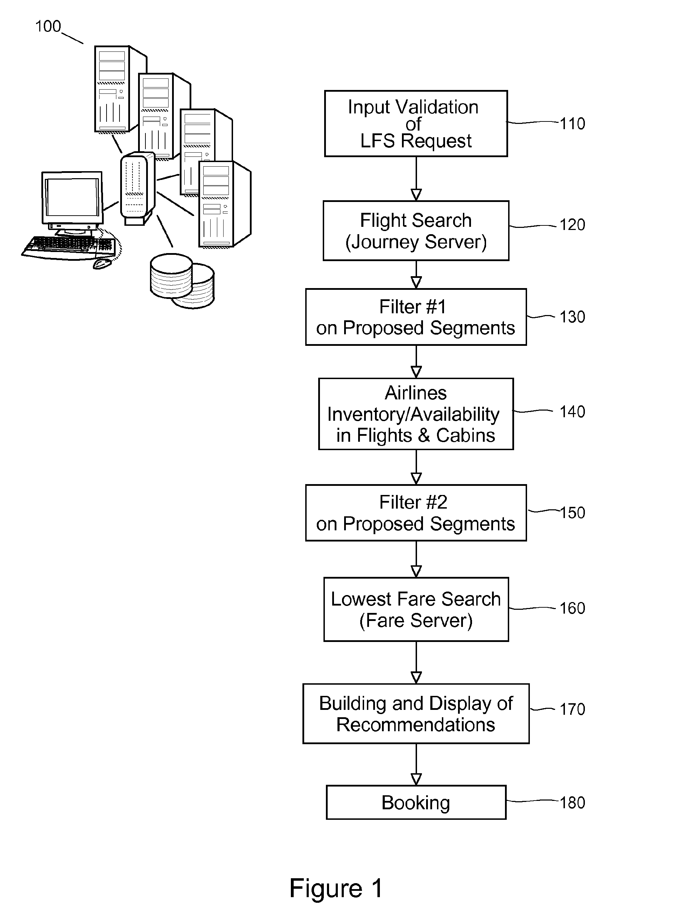

Figure 1 shows the steps of the method to display the lowest fares found by a travel search and booking engine of the prior art in response to a travel request, e.g., issued by a travel agent or by the end-user of an online travel application.

In any standard low-fare search and booking engine there is a validation step (110) which is aimed at checking the user access rights, minimum content and consistency of the search request: origin, destination, travel dates, passenger information, etc. The users of such low-fare search engines are typically the agents of regular travel agencies, those of airlines city or airport offices and agents of travel call centers. The users can be as well the end-users of various travel web applications made accessible through standard web browsers thus implementing online travel services that are conveniently available in a 24-hour-a-day mode from any personal computer connected to the Internet.

Once consistency of the travel request has been checked the next step (120) consists in selecting all flights and flight connections that potentially satisfy the travel request, taken into account all the constraints imposed by the travel regulations and airline restrictions that may apply. The building of all the possible connections that fulfill the travel request is then performed by a journey server part of the computerized resources put in place, e.g., by an airline or travel service provider. Often, as already mentioned in the background section, the computer resources (100) in use are those of a few global distribution systems (GDSs). They provide travel services on behalf of their affiliated airlines and, in general, to all the actors of the travel industry including the traditional and online travel agencies mentioned above.

A first filtering of all the possible segments that compose the requested itinerary for the selected travel dates occurs at step (130). This is intended to limit the amount of data to be considered, i.e., the number of proposed travel segments for which actual availability of flights and cabins will have to be retrieved at next step (140). To achieve this objective general selection rules and carrier preferred display (CPD) business rules are applied as early as possible to filter the proposed segments:

- The general selection rules take into consideration parameters such as the number of segments required to complete the requested itinerary and the number of legs composing the multi-leg segments. The general rules tend to retain the solutions requiring fewer segments and legs. Hence, all direct/non-stop proposed segments are always retained. Other parameters like the elapsed flight time (EFT), i.e.: the trip duration, and the airport continuity in a connecting city are also considered. This selection is however completely neutral on the view point of the selected airlines.
- The carrier preferred display (CPD) business rules consider things such as the point of sale, i.e., the channel through which a carrier seat offering is distributed. For example, this can be through an airline agent on a carrier domestic market, for a corporate customer of a specific country, online from carrier web site, etc. In which case the display is tailored to the particular distribution channel. Also, on markets defined by their origin/destination city pairs specific rules may apply. Such a market can be defined between a large city like Paris (PAR) and all the cities having an airport in a country, e.g.: Thailand (TH). Preference rules may also be defined on above criteria to reflect the carrier preferences, e.g., the order of display of the proposed segments.

Then, at step (140) the seat inventory of each flight concerned by each proposed segment is retrieved and checked for availability. This includes checking the seat availability in the cabins for each possible booking code.

Once actual availability of all proposed segments is known for the travel dates considered a second filtering (150) is done removing all unavailable proposed segments and further limiting the number of different air carriers involved. Typically, five different carriers are retained per requested segment.

After the proposed segments that compose the traveler itinerary have been filtered (130, 150) and seat availability checked (140), the search for the lowest available fares is performed (160) by a fare server. The fare server is part of any computerized resources and specific software applications (100) put in place by airlines and/or GDSs as previously discussed. The search of the cheapest travel recommendations can optionally be performed over a large range of dates, e.g., displayed in a calendar panel mode so that traveler is offered more travel opportunities, possibly cheaper, in a range of travel dates encompassing the requested travel dates. Alternatively, recommendations may include travel opportunities with higher levels of service than requested (hence, more expensive) if provider is practicing upselling of its travel offering. Each travel recommendation is thus composed of a fare and of an itinerary. Typically, anything from 1 to a few tenths of travel recommendations are retrieved to be displayed to the issuer of the travel request.

Prior to this, at step (170), similar travel recommendations are grouped and sorting rules applied to build the display. Optionally, an error message is displayed if no recommendation could be found that satisfies the travel request. The recommendations are grouped according to attributes such as the number of required via points and stopovers, the total price per passenger, fare families and service levels, etc.

Then, from the above display of travel recommendations, the issuer of the request can pick any one of the recommendations and proceed by booking online the corresponding journey.

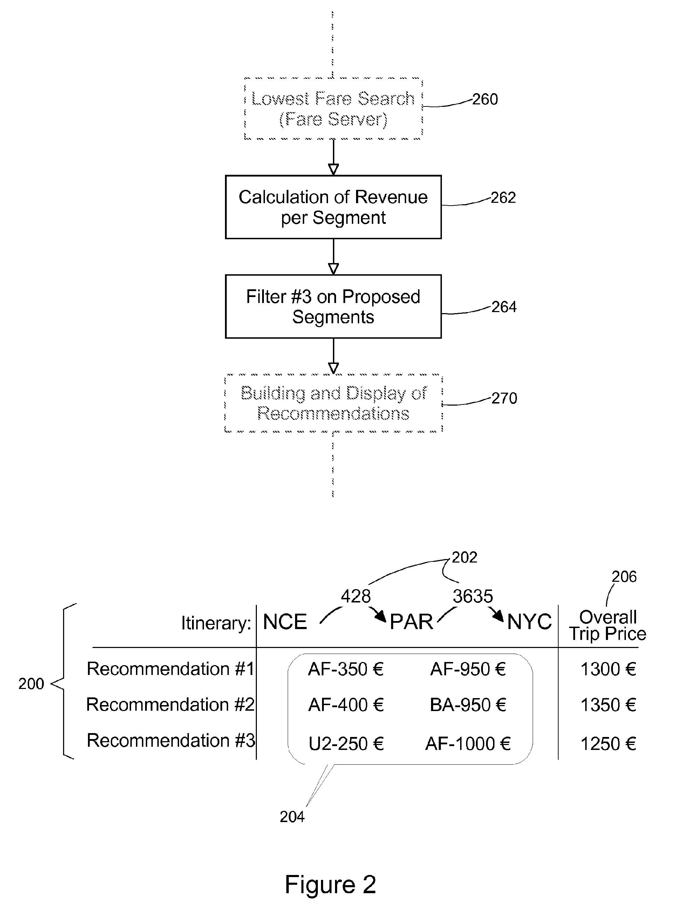

Figure 2 shows the extra steps introduced by the invention in the display of the travel recommendations returned by the low-fare search engine.

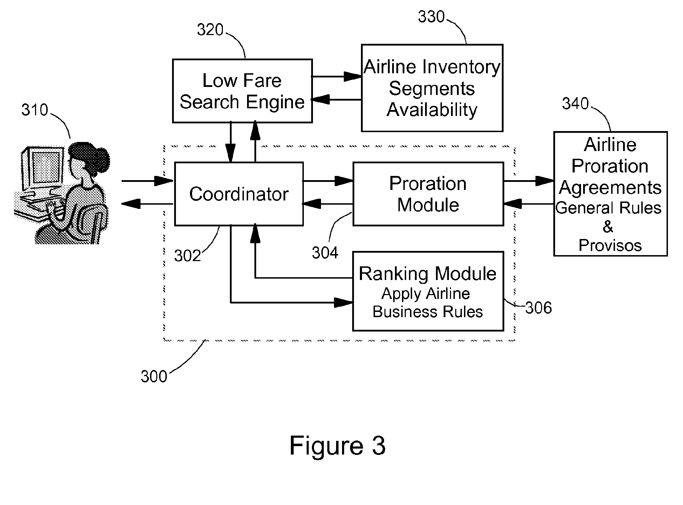

The purpose of the extra steps is to perform an additional filtering (264) of the proposed recommendations returned by the fare server (260) while searching the lowest fares of the proposed segments. The additional filtering is done on the basis of calculations done at previous step (262) by a proration module, further described in figure 3, aimed at determining the revenue attached to each proposed segment for the airline operating the flight. For each itinerary of the travel recommendations airline revenue per segment is thus calculated by the proration module. The calculation is done according to IATA general rules and/or provisos resulting of agreements between airlines as already outlined in the background section and further discussed in figure 3. Hence, the building and display of recommendations performed at next step (270) can take into account the actual revenue generated for the validating airline by a particular travel recommendation. The system can thus first display, among all found overall lowest fare recommendations of itineraries that meet the traveler request, the ones which however generate the highest revenue for the validating airline. To control the ordering of the display the travel recommendations are thus weighed according to various business rules set by the validating airline so that, e.g.: the highest net revenue is indeed considered (i.e.: the sum of revenue for the segments operated by the validating airline); the highest revenue per mile flown; or the highest revenue for the alliance of airlines of which the validating airline is a participating member. The above is by no means a limitative list of business rules that can be considered by the validating airline. Irrespective of the type of business rules applied a weight derived from the expected revenue is however always attributed to each travel recommendation to display them in a most appropriate order for the validating airline.

The above is illustrated in figure 2 with an example of a passenger itinerary between Nice, France (NCE) and New York City, USA (NYC) via Paris, France (PAR) for which three travel recommendations are returned (200) involving three independent airlines designated by their acronyms: AF, BA and U2. The exemplary results of the calculations of revenue per segment, performed by the proration module, are shown with the references of the airlines operating the flights of the corresponding segments (204). As mentioned above, proration is done according to IATA general rules taken into consideration, among other parameters, the ticket point mileage (TPM) published by IATA, i.e., the mileage between the cities of the itinerary which are respectively 428 and 3635 miles in this example (202). A straight proration on the basis of the miles flown is however often amended to take into consideration other factors such as the higher operational cost of short range vs. long haul flights as further discussed in figure 3.

Whichever method has been agreed upon between the participating airlines to perform the proration of revenue, in the particular example chosen to illustrate the invention (200), the ranking by lowest overall trip prices (206) leads to consider recommendations 3, 1 and 2 in this order. However, for the validating airline, assumed to be AF, the ranking by best revenues is rather 1, 3 and 2. And, on the basis of revenues per mile flown, the ranking becomes 2, 1 and 3.

Hence, from the viewpoint of the validating airline, AF in this example, in case of interlining, a better partner to choose from is U2 if the net highest revenue is considered. However, if the highest revenue per mile flown is the retained sorting criterion, BA becomes a better airline partner. On a given route, the validating airline is thus apt to select, among all participating airlines (airlines sharing an interlining agreement) a better partner when booking interlining tickets.

The building and display of recommendations is performed at step (270). Among the set of low fare travel recommendations returned by the low-fare search engine this step can thus take into account the individual segment revenues calculated by the prorate module to give precedence in the display to the travel recommendations that also maximize the revenue of the validating airline. This can be done on the basis of a chosen criterion such as the highest net revenue for the airline or for the group of airlines of which validating airline is a member, or the highest revenue per mile flown, or any criterion and combination of criterions the validating airline may decide to implement.

Figure 3 shows the modules involved in the computation of the prorated fare amounts per segment and the ranking of the travel recommendations on the basis of the revenue generated for the validating airline (300).

All the travel requests issued by travel or airline agents or by the end users of an online travel application (310) are handled by a coordinating module (302) which, in connection with a low-fare search engine (320) permits to get the available lowest air fares corresponding to the requests as explained in figure 1. The actual availability of all the segments of the travel recommendations are obtained from the airline seat inventory of flights and cabins (330).

Then, the proration module (304) performs the calculation of all the individual segments of the travel recommendations. To do so, the proration module needs to access the repository (340) of all proration agreements that have been contracted with other airlines, on a one to one basis, and possibly with groups of airlines. This includes the general rules published by IATA and, possibly, any special rules known as provisos.

A ranking module (306) sorts the travel recommendations using the business rules set by the validating airline. On the basis of these rules, among the low-fare travel recommendations found by the low-fare search engine, the ones that have the highest values for the validating airline are displayed first on the screen of the travel or airline agent or end-user of the online travel application as in example of figure 2 (200).

Following is a simple example that illustrates the kind of calculations performed by the proration module (304). Proration is sometimes done, as in the example of figure 2, on the basis of geographical distances (miles flown) using the ticket point mileages or TPMs (202) between cities to compute the sharing of revenue by the participating airlines. However, IATA also publishes prorate factors that are intended to take into consideration, e.g., the fact that longer journeys are, on a per mile basis, cheaper than shorter ones; or the fact that domestic and international flights are priced differently and cost are different in various parts of the world. These prorate factors, published for each city pair in the world and regularly updated, can be used instead of the geographical distances flown. In the following example a straight rate proration is applied based on the corresponding published prorate factors:

| | |
|---|---|
| Itinerary: | Nice - Paris - New York |
| Airlines | AF NW |
| Total fare: | 1648.41 € |
| Date of issuance: | 02 May 2008 |
| Ticket issued by: | AF |
| Fare class: | Y |
| Prorate factors: | NCE - CDG 972 As published by IATA |

$$\text{CDG - JFK:} \quad \underline{4475}$$
$$\text{Total:} \quad \underline{5447}$$

| | |
|---|---|
| Segment NCE - CDG | 1648.41 x 972 / 5447 = 294,15 € to AF |
| Segment CDG - JFK | 1648.41 x 4475 / 5447 = 1354,26 € to NW |

In this straightforward example the published prorate factors are used to split proportionally the total fare and share the revenue accordingly between the validating airline which has issued the ticket (AF) and the participating airline (NW).

And, as already mentioned, the proration module needs also to take into consideration any special rules or provisos that may be part of the agreements between airlines practicing interlining. Provisos are exceptions to the application of the straight rate proration rule, e.g., on certain geographical sectors on which the airlines operate (on specific city pairs, groups of city pairs, in a country, etc.). They can apply to all fares, or can be specified for particular fare types.

**Claims**

1. Method of processing data for producing a display of travel recommendations matching an itinerary, said method being adapted to the display of interlining travel recommendations made of a plurality of travel segments operated by a plurality of travel carriers, **characterized in that** it comprises the following steps:

- From a computer device, sending a travel search request comprising search criteria to a remote travel search and booking engine;

- At the travel search and booking engine, building available travel recommendations matching the search criteria and;

For each available travel recommendation:

- Determining an expected revenue for each travel segment operated by a travel carrier involved in the travel recommendation;

- Determining a weight based on said expected revenue of said travel carrier;

- Sorting and generating display data of at least a set of the travel recommendations by decreasing order of said weights;

- Returning the display data to the computer device and displaying the available travel recommendations.

2. The method of claim 1 wherein the step of determining an expected revenue step is done on the basis of a proration of the total price of the corresponding travel recommendation.

3. The method according to claim 2 wherein the proration is done on the basis of the mileage flown per segment.

4. The method of claim 2 wherein the proration is done on the basis of published prorate factors.

5. The method of any one of the claims 2 to 4 wherein the proration is amended according to provisos agreed upon between airlines operating flights of the travel itinerary.

6. The method of any one of claims 2 to 4 wherein the proration is amended according to bilateral agreements between airlines.

7. The method of any one of the preceding claims wherein said weight is the sum of expected revenue of one or more segments operated by said travel carrier.

8. The method according to claim 7 wherein said weight further includes expected revenue of one or more segments operated by airlines partner of said travel carrier.

9. The method of any one of the preceding claims wherein said weight is the sum of expected revenues of one or more segments operated by said travel carrier divided by the mileage flown or a function thereof.

10. The method according to claim 9 wherein said weight further includes expected revenue divided by the mileage flown or a function thereof of one or more segments operated by airlines partner of said travel carrier.

11. The method of any of the preceding claims wherein said travel carrier is the airline issuing the travel tickets.

12. The method of claim 11 wherein the sorting of the travel recommendations is done on the basis of business rules set by the airline issuing the travel tickets.

13. Data processing system for producing a display of travel recommendations matching an itinerary, said system being adapted to the display of interlining travel recommendations made of a plurality of travel segments operated by a plurality of travel carriers, **characterized in that** it comprises:

- A computer device having means for inputting search criteria, communications means for sending a travel search request comprising the search criteria and display means;

- A travel search and booking engine in communication with the computer device and having means for building travel recommendations matching the search criteria of and;

- Computing means configured to, for each travel recommendation:

Determine an expected revenue for each travel segment operated by a travel carrier involved in the travel recommendation;

Determine a weight based on said expected revenue of said travel carrier;

Sort and generate display data of at least a set of the travel recommendations by decreasing order of said weight;

Return the display data to the computer device.

**14.** The system of claim 13 further comprising means adapted for carrying out each step of the method according to any one of the claims 1 to 12.

**15.** Systems according to claim 13 or 14 wherein the computing means comprises:

- a proration module for determining the expected revenue for each travel segment operated by a travel carrier involved in the travel recommendation;
- a ranking module for sorting the travel recommendations by decreasing order of weights based on said expected revenue of said travel carrier;
- a coordinator in communication with the proration module, the routing module, the computer device and the travel search and booking engine.

**16.** A computer program product stored on a computer readable storage medium, comprising computer readable code means for causing at least one computer to operate the method of sorting and displaying travel recommendations according to any one of the claims 1 to 12.

100

```
┌─────────────────────┐
│   Input Validation  │
│         of          │──── 110
│    LFS Request      │
└─────────────────────┘
           │
           ▽
┌─────────────────────┐
│   Flight Search     │
│  (Journey Server)   │──── 120
└─────────────────────┘
           │
           ▽
┌─────────────────────┐
│      Filter #1      │
│ on Proposed Segments│──── 130
└─────────────────────┘
           │
           ▽
┌─────────────────────┐
│      Airlines       │
│ Inventory/Availability│── 140
│  in Flights & Cabins│
└─────────────────────┘
           │
           ▽
┌─────────────────────┐
│      Filter #2      │
│ on Proposed Segments│──── 150
└─────────────────────┘
           │
           ▽
┌─────────────────────┐
│  Lowest Fare Search │
│    (Fare Server)    │──── 160
└─────────────────────┘
           │
           ▽
┌─────────────────────┐
│ Building and Display of│
│   Recommendations   │──── 170
└─────────────────────┘
           │
           ▽
┌─────────────────────┐
│      Booking        │──── 180
└─────────────────────┘
```

Figure 1

Figure 2

Figure 3

Europäisches
Patentamt

European
Patent Office

Office européen
des brevets

**EUROPEAN SEARCH REPORT**

Application Number

EP 08 30 5894

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| L | The technical aspects identified in the present application (Art. 92 EPC) are considered part of common general knowledge. Due to their notoriety no documentary evidence is found to be required. For further details see the accompanying Opinion and the reference below. XP002456252 ----- | 1-16 | INV. G06Q10/00 |
| | | | **TECHNICAL FIELDS SEARCHED (IPC)** G06Q |

The present search report has been drawn up for all claims

| Place of search | Date of completion of the search | Examiner |
|---|---|---|
| Munich | 14 May 2009 | Closa, Daniel |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

............................................................................
& : member of the same patent family, corresponding
document

EPO FORM 1503 03.82 (P04C01)